# EUROPÄISCHE PATENTSCHRIFT

(11) **EP 2 551 859 B1**
(45) Veröffentlichungstag und Bekanntmachung des Hinweises auf die Patenterteilung: **01.10.2014**
(21) Anmeldenummer: 11305984.4
(22) Anmeldetag: 28.07.2011
(51) Int. Cl.: H01B 12/02, H01B 12/16

(54) **Anordnung mit einem supraleitfähigen elektrischen Gleichstrom-Kabelsystem**
Assembly with a superconducting electric direct current cable system
Agencement doté d'un système de câble électrique supraconducteur à courant continu

(43) Veröffentlichungstag der Anmeldung: 30.01.2013
(73) Patentinhaber: Nexans, 75008 Paris (FR)
(72) Erfinder: Dr. Stemmle, Mark, 30625 Hannover (DE); Dr. Marzahn, Erik, 30853 Langenhagen (DE)
(74) Vertreter: Döring, Roger

(56) Entgegenhaltungen:
- EP-A1- 2 234 122
- EP-A2- 0 451 864
- WO-A1-2008/148390
- US-A- 3 414 662

## Beschreibung

Die Erfindung bezieht sich auf eine Anordnung mit einem supraleitfähigen elektrischen Gleichstrom-Kabelsystem gemäß dem Oberbegriff des Patentanspruchs 1.

Eine solche Anordnung geht aus der US 3 414 662 A hervor.

Supraleitfähige Kabel haben in heutiger Technik elektrische Leiter aus einem Verbundwerkstoff, welcher keramisches Material enthält, das bei ausreichend tiefen Temperaturen in den supraleitfähigen Zustand übergeht. Der elektrische Gleichstromwiderstand eines entsprechend aufgebauten Leiters ist bei ausreichender Kühlung Null, solange eine bestimmte Stromstärke nicht überschritten wird. Geeignete keramische Materialien sind beispielsweise BSCCO (Wismut-Strontium-Kalzium-Kupfer-Oxid) als Material der 1. Generation oder ReBCO (Rareearth-Barium-Kupfer-Oxid), insbesondere YBCO (Yttrium-Barium-Kupfer-Oxid), als Materialien der 2. Generation. Ausreichend niedrige Temperaturen, um ein derartiges Material in den supraleitfähigen Zustand zu bringen, liegen beispielsweise zwischen 67 K und 90 K. Geeignete Kühlmittel sind beispielsweise Stickstoff, Helium, Neon und Wasserstoff oder Gemische dieser Stoffe.

Ein supraleitfähiges elektrisches Gleichstrom-Kabel kann beispielsweise als Stromversorgungskabel auf Schiffen oder als Verbindungskabel zwischen Knotenpunkten innerhalb eines Übertragungsnetzes sowie auch als Verbindungskabel zwischen unterschiedlichen Übertragungsnetzen eingesetzt werden. Dabei kann es sich beispielsweise um eine Anordnung für eine Hochspannungs-Gleichstromübertragung (HGÜ) handeln, die zur Überbrückung langer Strecken verwendet werden kann, beispielsweise als Seekabel. Gegenüber supraleitfähigen Wechselstromkabeln haben supraleitfähige Gleichstrom-Kabel den Vorteil, daß keine elektrischen Wechselstromverluste entstehen. Außerdem werden die Gleichstrom-Kabel nicht mit Ladeströmen belastet und es treten keine unerwünschten induktiven Spannungsabfälle auf.

Aus der WO 2008/148390 A1 geht ein zweiphasiges elektrisches Kabel zur Stromversorgung von Verbrauchern elektrischen Stroms hervor. Es ist als supraleitfähiges Kabel mit zwei Phasenleitern ausgeführt, die koaxial zueinander und durch ein inneres Dielektrikum voneinander getrennt zu einer Einheit zusammengefaßt sind. Das Kabel ist in einem Kryostat angeordnet, der aus zwei konzentrischen Rohren besteht, zwischen denen eine Vakuumisolierung angebracht ist. Das Kühlmittel zur Erzeugung des supraleitfähigen Zustands der Phasenleiter wird durch den Kryostat geleitet. Die Kühlung eines solchen Kabels kann problematisch sein, weil für die Kühlung der supraleitfähigen Phasenleiter das Dielektrikum eine thermische Isolierung darstellt.

In der eingangs erwähnten US 3 414 626 A ist ein System mit vier supraleitfähigen Leitern beschrieben, von denen jeder nur aus einem Band besteht, das rundum von einer Umhüllung aus Isoliermaterial umgeben ist. Das supraleitfähige Band kann als solches frei in der Umhüllung angeordnet oder auch in eine elastisch verformbare Schicht eingebettet sein, die dann von der Umhüllung umgeben ist. Die Umhüllungen der vier supraleitfähigen Bänder haben Löcher, damit eine kryogene Flüssigkeit zu den Leitern gelangen kann, die sich in einem alle Leiter umgebenden Kryostat befindet. In dem System sind vier jeweils von einer Umhüllung umgebene Leiter übereinander angeordnet. Zwischen zwei gegebenenfalls von einer elastischen Schicht umgebenen Leitern liegen dadurch jeweils die Abschnitte von zwei Umhüllungen. Die außen liegenden Leiter bzw. ihre Umhüllungen sind außerdem gegenüber dem Kryostat durch Isolierblöcke abgestützt.

Der Erfindung liegt die Aufgabe zugrunde, die eingangs geschilderte Anordnung einfacher zu gestalten.

Diese Aufgabe wird entsprechend den kennzeichnenden Merkmalen des Patentanspruchs 1 gelöst.

Ein Gleichstrom-Übertragungselement dieser Anordnung ist einfach und kompakt aufgebaut. Jeder Phasenleiter eines solchen Bauteils besteht aus einer Vielzahl von supraleitfähigen Elementen, die nur von einer Hülle aus Isoliermaterial umgeben sind, so daß dieselben bzw. der jeweilige Phasenleiter von einem durch den Kryostat bewegten Kühlmittel direkt gekühlt werden. Die Anzahl der in einem Kryostat anzuordnenden Gleichstrom-Übertragungselemente ist in Abhängigkeit von der lichten Weite des Kryostats variabel, so daß die Anordnung auf einfache Art und Weise an unterschiedliche Stromstärken angepaßt werden kann, mit entsprechend variablem Bedarf an supraleitfähigem Material. Der Aufbau der Anordnung kann dementsprechend modulartig durch eine unterschiedliche Anzahl von Gleichstrom-Übertragungselementen verändert werden, die im Kryostat angeordnet werden. Sie sind insgesamt durch den Kryostat thermisch isoliert.

Ausführungsbeispiele des Erfindungsgegenstandes sind in den Zeichnungen dargestellt.

Es zeigen:
Fig. 1 eine Anordnung nach der Erfindung in rein schematischer Darstellung.
Fig. 2 und 3 ein in der Anordnung verwendbares Gleichstrom-Übertragungselement in zwei unterschiedlichen Ausführungsformen.
Fig. 4 die Anordnung nach der Erfindung in gegenüber Fig. 1 präzisierter Ausführungsform.

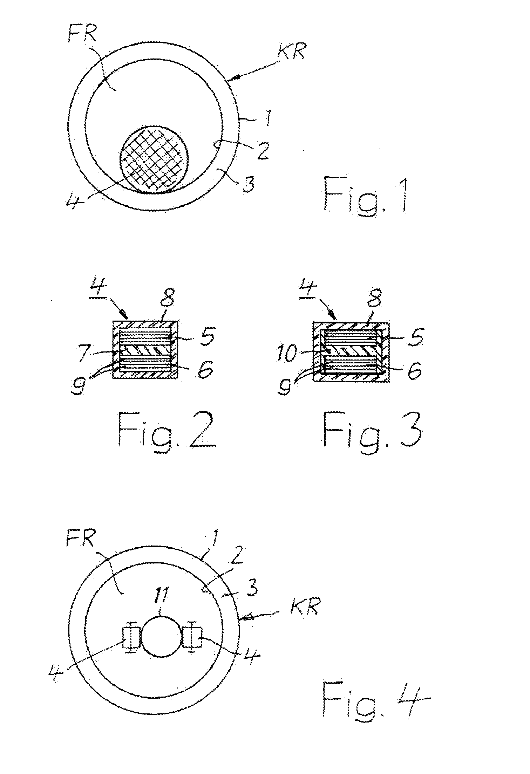

Im Ausführungsbeispiel der Anordnung nach Fig. 1 ist ein Kryostat KR dargestellt, der aus zwei koaxial zueinander angeordneten metallischen Rohren 1 und 2 besteht, zwischen denen sich eine Vakuumisolierung 3 befindet. Der Kryostat KR könnte auch einen anderen Aufbau haben, wenn sichergestellt ist, daß der von ihm umschlossene Raum wirksam gegen Wärmeeinfall von außen geschützt ist. Im Kryostat KR ist ein Gleichstrom-Übertragungselement 4 - im folgenden kurz "GÜ 4" genannt - angeordnet, dessen genauerer Aufbau beispielsweise aus den Fig. 2 und 3 hervorgeht. Das GÜ 4 läßt gegenüber dem inneren Rohr 2 des Kryostats KR einen Freiraum FR zum Durchleiten eines Kühlmittels frei.

Ein GÜ 4 besteht gemäß Fig. 2 beispielsweise aus zwei Phasenleitern 5 und 6, die durch eine Trennschicht 7 aus Isoliermaterial gegeneinander isoliert sind. Die beiden Phasenleiter 5 und 6 können im Betrieb der Anordnung an unterschiedliche Polaritäten oder an eine Polarität und Erde angeschlossen sein. Die Einheit von Phasenleitern 5 und 6 und Trennschicht 7 ist von einer Hülle 8 aus Isoliermaterial umgeben. Die Hülle 8 hält nicht nur die beiden Phasenleiter 5 und 6 in ihrer Position, sondern sie isoliert das GÜ 4 auch gegenüber dem Kryostat KR.

Jeder Phasenleiter 5 oder 6 besteht aus mehreren supraleitfähigen Elementen, die gemäß Fig. 2 und 3 als flache Streifen 9 ausgeführt sind. Es könnten beispielsweise aber auch runde Drähte als supraleitfähige Elemente eingesetzt werden.

In einer aus Fig. 3 ersichtlichen Ausgestaltung des GÜs 4 ist als isolierendes Bauteil statt der einfachen Trennschicht 7 ein H-förmiger Abstandshalter 10 eingesetzt, der zwei einander gegenüberliegende Räume hat, in denen die supraleitfähigen Elemente, hier sind es die Streifen 9, angeordnet sind. Die Hülle 8 umschließt dann auch den Abstandshalter 10 mit den darin liegenden supraleitfähigen Elementen.

In dem Kryostat KR ist entsprechend Fig. 1 mindestens ein GÜ 4 angeordnet. Die Anzahl der in einem Kryostat KR anzubringenden GÜs 4 richtet sich wesentlich nach der Höhe der zu übertragenden Stromstärke, aber - wie bereits erwähnt - auch nach der Größe des Freiraums FR.

Mindestens ein GÜ 4 kann innerhalb des Kryostats KR um einen langgestreckten Träger 11 wendelförmig herumgewickelt sein, der in Fig. 4 angedeutet ist. Der Träger 11 ist in Fig. 4 der Übersichtlichkeit halber "frei schwebend" eingezeichnet. Er liegt beim Betrieb der Anordnung zusammen mit dem herumgewickelten GÜ 4 am inneren Rohr 2 des Kryostats KR an. In dem in Fig. 4 dargestellten Ausführungsbeispiel sind zwei wendelförmig um den Träger 11 herumgewickelte GÜs 4 eingezeichnet. Der Träger 11 kann ein massiver Strang oder auch ein Rohr sein, das zur Rückführung eines durch den Freiraum FR des Kryostats KR bewegten Kühlmittels dienen kann. Das Material des Trägers 11 muß bei den niedrigen Temperaturen des im Betriebsfall eingesetzten Kühlmittels beständig sein. Eine entsprechende Temperatur liegt gemäß den obigen Ausführungen beispielsweise zwischen 67 K und 90 K. Ein geeignetes Material ist beispielsweise Polytetrafluorethylen. Der Träger 11 kann aber auch aus Metall bestehen, beispielsweise aus Edelstahl.

## Patentansprüche

1. Anordnung mit einem supraleitfähigen elektrischen Gleichstrom-Kabelsystem, das mindestens ein aus zwei gegeneinander isolierten Phasenleitern bestehendes Gleichstrom-Übertragungselement aufweist, bei welcher zwischen den beiden Phasenleitern eine Trennschicht aus Isoliermaterial angebracht ist, und mit einem zur Führung eines Kühlmittels geeigneten Kryostat, in welchem das Gleichstrom-Kabelsystem angeordnet ist und welcher aus mindestens einem metallischen Rohr besteht, das von einer rundum geschlossenen Schicht mit wärmeisolierenden Eigenschaften umgeben ist, **dadurch gekennzeichnet,**
- **daß** jeder der beiden Phasenleiter (5,6) aus mehreren, zu einer Einheit zusammengefaßten supraleitfähigen Elementen besteht und
- **daß** die beiden Phasenleiter (5,6) einschließlich der Trennschicht (7) zur Bildung eines Gleichstrom-Übertragungselements (4) von einer Hülle (8) aus Isoliermaterial umgeben sind.

2. Anordnung nach Anspruch 1, **dadurch gekennzeichnet, daß** die supraleitfähigen Elemente flache Streifen (9) sind.

3. Anordnung nach Anspruch 1, **dadurch gekennzeichnet, daß** die supraleitfähigen Elemente runde Drähte sind.

4. Anordnung nach einem der Ansprüche 1 bis 3, **dadurch gekennzeichnet, daß** mindestens ein aus zwei gegeneinander isolierten Phasenleitern (5,6) bestehendes Gleichstrom-Übertragungselement (4) wendelförmig um einen langgestreckten Träger (11) herumgewickelt ist.

5. Anordnung noch Anspruch 4, **dadurch gekennzeichnet, daß** der Träger (11) ein massiver Strang ist.

6. Anordnung nach Anspruch 4, **dadurch gekennzeichnet, daß** der Träger (11) ein Rohr ist.

## Claims

1. Arrangement with a superconductive electrical direct current cable system, which comprises at least one direct current transmission element consisting of two phase conductors which are insulated relative to each other, wherein a separating layer of insulating material is mounted between the two phase conductors, and with a cryostat suitable for conducting a cooling agent, which surrounds the direct current cable system, wherein the cryostat comprises at least one metal pipe which is surrounded by a circumferentially closed layer with thermal insulating properties, **characterized in**
- **that** each of the two phase conductors (5,6) consists of several superconductive elements which are combined to form a unit and
- **that** the two phase conductors (5,6), including the separating layer (7), are surrounded by a sheath of insulating material for forming a direct current transmission element.

2. Arrangement according to claim 1, **characterized in that** the superconductive elements are flat strips (9).

3. Arrangement according to claim 1, **characterized in that** the superconductive elements are round wires.

4. Arrangement according to one of the claims 1 to 3, **characterized in that** at least one direct current transmission element (4), composed of two phase conductors (5,6) which are insulated relative to each other, is helically wound around an elongated support (11).

5. Arrangement according to claim 4, **characterized in that** the support (11) is a solid strand.

6. Arrangement according to claim 4, **characterized in that** the support (11) is a tube.

## Revendications

1. Ensemble doté d'un système de câble électrique supraconducteur pour courant continu, l'ensemble présentant
au moins un élément de transfert de courant continu constitué de deux conducteurs de phase mutuellement isolés,
une couche de séparation en matériau isolant placée entre les deux conducteurs de phase et
un cryostat qui convient pour apporter un agent de refroidissement, dans lequel le système de câbles à courant continu est disposé et qui est constitué d'au moins un tube métallique entouré par une couche fermée à propriétés d'isolation thermique,
**caractérisé en ce**
- **que** chacun des deux conducteurs de phase (5, 6) est constitué de plusieurs éléments supraconducteurs assemblés en une unité et
- **que** en ce que les deux conducteurs de phase (5, 6) et la couche de séparation (7) sont entourés par une enveloppe (8) en matériau isolant pour former un élément (4) de transfert de courant continu.

2. Ensemble selon la revendication 1, **caractérisé en ce que** les éléments supraconducteurs sont des rubans plats (9).

3. Ensemble selon la revendication 1, **caractérisé en ce que** les éléments supraconducteurs sont des fils ronds.

4. Ensemble selon l'une des revendications 1 à 3, **caractérisé en ce qu'**au moins un élément (4) de transfert de courant continu constitué de deux conducteurs de phase (5, 6) isolés l'un de l'autre est enroulé en spirale autour d'un support allongé (11).

5. Ensemble selon la revendication 4, **caractérisé en ce que** le support (11) est un barreau massif.

6. Ensemble selon la revendication 4, **caractérisé en ce que** le support (11) est un tube.
